# EUROPEAN PATENT APPLICATION

(11) **EP 2 506 608 A1**
(43) Date of publication of application: **03.10.2012**
(21) Application number: 10841911.0
(22) Date of filing: 13.06.2010
(51) Int. Cl.: H04W 4/10, H04W 88/02

(54) **PUSH-TO-TALK MOBILE TERMINAL**

(30) Priority: 11.01.2010 CN 201020003006 U
(71) Applicant: ZTE Corporation, Shenzhen, Guangdong 518057 (CN)
(72) Inventor: XU, Hai, Guangdong 518057 (CN)
(74) Representative: Anderson, Angela Mary
(86) International application number: PCT/CN2010/073981
(87) International publication number: WO 2011/082568

(57) **Abstract**

A push-to-talk mobile terminal is disclosed, and includes a mobile terminal body of push-to-talk. The mobile terminal also includes: a multifunctional interface socket and peripheral devices, wherein, one end of the multifunctional interface socket is connected with the mobile terminal body, and the other end is connected with the peripheral devices; the mobile terminal body includes a switch interface, and the mobile terminal body is connected with the multifunctional interface socket through the switch interface; the peripheral devices include an external Push To Talk (PTT) keyboard for controlling conversations of the push-to-talk mobile terminal. Therefore, the provided push-to-talk mobile terminal not only facilitates users to use and guarantees traffic safety, but also can enhance conversation effect and be easy to carry.

## Description

### Technical Field

The present invention relates to the field of mobile terminal, and particularly, to a push-to-talk mobile terminal for dual-use of vehicle and portability.

### Background of the Related Art

Push To Talk (PTT) or Push to talk over Cellular (POC) mobile terminals are increasingly used in certain countries or districts. However, the requirement on battery capacity is higher due to the larger electrical energy consumption in conversations by interphones, and tone quality and conversation volume with a louder voice are required due to noisier voices in certain cars, therefore, a requirement for a Speaker is higher.

In addition, if a hand-held PTT mobile terminal is used while driving, certain security risks will exist. Therefore, current vehicle PTT mobile terminals are basically fixed in the cars, and only when the user is inside the car, he/she can use the PTT mobile terminal; however, when the user is outside the car, he/she uses the additional PTT mobile terminal, so one user needs to use multiple numbers, but the user is generally unaccustomed to use multiple numbers. Hence, it is required that the PTT mobile terminal not only can be used in the car, but also should be easy to carry and can be used outside the car. However, there is no such a PTT mobile terminal for the user to choose the use at presently.

### Content of the Invention

The technical problem required to be solved by the present invention is to provide a push-to-talk mobile terminal, which not only facilitates users to use and guarantees traffic safety, but also can enhance conversation effect and be easy to carry.

In order to solve the above problem, the present invention provides a push-to-talk mobile terminal, which comprises a mobile terminal body of push-to-talk, a multifunctional interface socket and peripheral devices, wherein,
one end of the multifunctional interface socket is connected with the mobile terminal body, and the other end is connected with the peripheral devices;
the mobile terminal body comprises a switch interface, and the mobile terminal body is connected with the multifunctional interface socket through the switch interface;
the peripheral devices comprise an external PTT keyboard for controlling conversations of the push-to-talk mobile terminal.

Furthermore, the switch interface is in an elastic sheet shape; wherein, the switch interface is flicked through the elastic sheet to disconnect a function of a PPT key of the mobile terminal body and switch the function of the PTT key to the external PTT keyboard.

Furthermore, the external PTT keyboard is a keyboard like a wrist watch, and is buckled on a steering wheel.

Furthermore, the multifunctional interface socket comprises: a key switch interface, an external Speaker interface, a charge interface and an external microphone interface; the peripheral devices further comprise an external Speaker device and an external microphone.

Furthermore, after the mobile terminal body is connected with the multifunctional interface socket, the mobile terminal body disconnects a Speaker of the mobile terminal body through the switch interface, and broadcasts conversations through the external Speaker device.

Furthermore, the external Speaker device is an intra-car sound box device, and is connected with the external Speaker interface of the multifunctional interface socket; when receiving a call, the mobile terminal body disconnects connections between the intra-car sound box device and other sound source devices through the multifunctional interface socket, and broadcasts the conversation voices.

Furthermore, the external microphone is a desktop microphone, and is connected with the external microphone interface of the multifunctional interface socket; after the mobile terminal body is connected with the multifunctional interface socket, the mobile terminal body disconnects a built-in microphone of the mobile terminal body through the switch interface, and makes conversations through the external microphone.

Furthermore, the external Speaker device, the external microphone and the external PTT keyboard are an integrated device. Wherein, the integrated device is in a hand shank shape.

Compare with the related art, by applying the present invention, it not only facilitates users to use and guarantees the traffic safety, but also can enhance conversation effect, extend the standby time of the mobile terminal and be easy to carry. Especially, the present invention has a prominent effect when it is applied in environments such as an agricultural machinery operation and an engineering machinery operation, and so on.

### Brief Description of Drawings

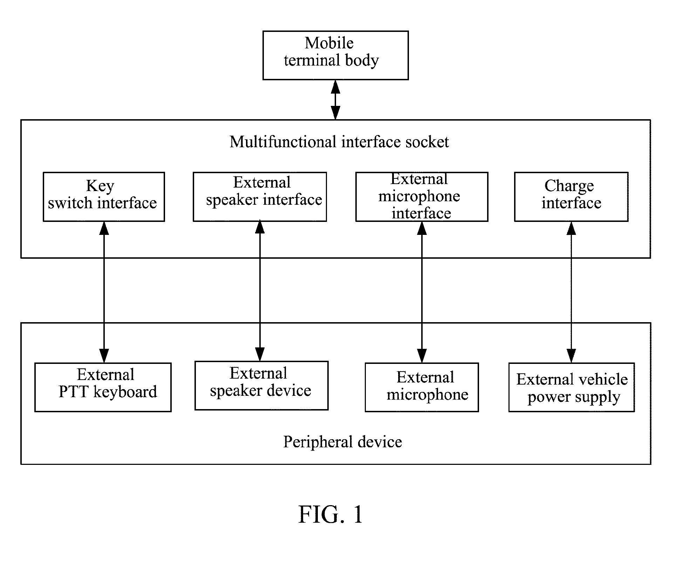

FIG. 1 is a structure diagram of a push-to-talk mobile terminal according to the present invention.

### Preferred Embodiments of the Present Invention

The present invention will be further described in combination with the accompanying drawings and specific embodiments below.

With regard to a push-to-talk mobile terminal used by a vehicle, following aspects of requirements exist:
1) due to noises, a Speaker with louder volume and better tone quality is required, for example, an intra-car sound box device is used;
2) since more power consumption exists in PTT conversations, it is required that an interface can implement a charge function;
3) in order to enhance safe driving of drivers, it is required that a key being able to be convenient for use is used as a PTT key (or a key including the PTT key and possessing other parts of functions) for use.

In view of the above requirements, the present example provides a dual-purpose push-to-talk mobile terminal for vehicle and portability. As shown in FIG. 1, the push-to-talk mobile terminal includes: a mobile terminal body of push-to-talk, a multifunctional interface socket and peripheral devices. Wherein, one end of the multifunctional interface socket is connected with the mobile terminal body, and the other end is connected with the peripheral devices.

Furthermore, the peripheral devices comprise: an external Speaker device, an external PTT keyboard, an external microphone and an external vehicle power supply. The push-to-talk mobile terminal makes conversations through the control of the peripheral devices, and when the mobile terminal body is connected with the multifunctional interface socket, the push-to-talk mobile terminal controls operations of the PTT key through the external PTT keyboard of the peripheral devices.

Furthermore, the mobile terminal body is mainly a mobile terminal which has a PTT function, and also includes a switch interface, wherein the switch interface can be designed into a shape of switching by an elastic sheet. The switch interface can be connected with the multifunctional interface socket. In the main body design of the mobile terminal, the size of the mobile terminal is reduced, thus an artistic exterior of the mobile terminal can be kept.

In the present example, after the mobile terminal body is connected with the multifunctional interface socket, the elastic sheet of the switch interface in elastic sheet shape of the mobile terminal body is flicked, and the mobile terminal body will automatically lock the PTT key of the mobile terminal body after detecting such a signal.

Furthermore, the multifunctional interface socket can be installed in a car conveniently, which makes a driver can conveniently get hold of the mobile terminal. The multifunctional interface socket is used to make the mobile terminal body connect with the peripheral devices, and the multifunctional interface socket includes: a key switch interface, an external Speaker interface, a charge interface and an external microphone interface.

Furthermore, the multifunctional interface socket also includes a potential device, an external power supply interface or an external device interface. Here, the interface between the multifunctional interface socket and the peripheral device can be designed into a wired or wireless device.

It should be illustrated that, when the mobile terminal body is connected with the multifunctional interface socket, the function of the PTT key of the mobile terminal body can be automatically disconnected through the switch interface, and the function of the PTT key is switched to the external PTT keyboard through the key switch interface of the multifunctional interface socket. It is mainly because that there is a long key or a double-click key in use of the PTT key, and there is an explicit division of labor for pressing the key and releasing the key, and thus to avoid that the PTT key of the mobile terminal body and the external PTT key are operated simultaneously.

In the present example, in order to try to keep clean and tidy and aesthetic inside the car, the external PTT keyboard can be designed into a keyboard like a wrist watch and buckled on a place of a steering wheel on which the driver can touch conveniently.

It should be pointed that, when the mobile terminal body is connected with the multifunctional interface socket, a Speaker of the mobile terminal body can be automatically disconnected through the switch interface, and conversation voices are broadcasted through the external Speaker device. Here, the external Speaker device is similar to an interface of a common headset, and preferably, the external Speaker device can be in common use with a headset inserting card.

In the present example, the external Speaker device can be an intra-car sound box device and is connected with the external Speaker interface of the multifunctional interface socket. The multifunctional interface socket can disconnect connections between the intra-car sound box device and other sound source devices when there is an incoming call, and broadcasts the conversation voices. For example, when listening to music in the car, and if receiving the call, the multifunctional interface socket can automatically disconnect the connection with the music player, and then turn to broadcast the conversation voices.

In the present example, the external microphone can be a desktop microphone and is connected with the external microphone interface of the multifunctional interface socket. When the mobile terminal body is connected with the multifunctional interface socket, a built-in microphone of the mobile terminal body can be disconnected through the switch interface, and conversations are made through the external microphone.

Preferably, the multifunctional interface socket can be placed in a position close to the front of the driver's seat. One external PTT keyboard like a wrist watch is installed on the steering wheel, and the external microphone is placed at the position in front of the driver.

Furthermore, in order to make the complete set of devices and vehicle (such as a car, and so on) have independence, the external Speaker device, the external microphone and the external PTT keyboard can be an integrated device, and the integrated device is in hand shank shape, so as to make it convenient for user to use.

The mobile terminal body can be connected with the multifunctional interface socket by using a standard voltage adapter, and the charge interface is connected with the external vehicle power supply to charge the mobile terminal body.

The above description is only the specific embodiments of the present invention, but the protection scope of the present invention is not limited to the above description. Changes and substitutions, which can be thought by any person skilled in the art and be within the technical scope disclosed by the present invention, should be all covered within the protection scope of the present invention. Therefore, the protection scope of the present invention should be subject to the protection scope of the claims.

## Claims

1. A push-to-talk mobile terminal, comprising a mobile terminal body of Push To Talk (PTT), wherein, the mobile terminal further comprises: a multifunctional interface socket and peripheral devices, wherein,
one end of the multifunctional interface socket is connected with the mobile terminal body, and the other end is connected with the peripheral devices;
the mobile terminal body comprises a switch interface, and the mobile terminal body is connected with the multifunctional interface socket through the switch interface;
the peripheral devices comprise an external PTT keyboard for controlling conversations of the push-to-talk mobile terminal.

2. The push-to-talk mobile terminal according to claim 1, wherein, the switch interface is in an elastic sheet shape;
wherein, the switch interface is flicked through the elastic sheet, to switch a function of a PTT key of the mobile terminal body to the external PTT keyboard.

3. The push-to-talk mobile terminal according to claim 1, wherein, the external PTT keyboard is a keyboard like a wrist watch, and is buckled on a car's steering wheel.

4. The push-to-talk mobile terminal according to claim 1 or 3, wherein, the multifunctional interface socket comprises: a key switch interface, an external Speaker interface, a charge interface and an external microphone interface;
the peripheral devices further comprise an external Speaker device and an external microphone.

5. The push-to-talk mobile terminal according to claim 4, wherein, after the mobile terminal body is connected with the multifunctional interface socket, the mobile terminal body disconnects a Speaker of the mobile terminal body through the switch interface, and broadcasts conversation voices through the external Speaker device.

6. The push-to-talk mobile terminal according to claim 4, wherein, the external Speaker device is an intra-car sound box device, and is connected with the external Speaker interface of the multifunctional interface socket;
when receiving a call, the mobile terminal body disconnects connections between the intra-car sound box device and other sound source devices through the multifunctional interface socket, and broadcasts the conversation voices.

7. The push-to-talk mobile terminal according to claim 4, wherein, the external microphone is a desktop microphone, and is connected with the external microphone interface of the multifunctional interface socket;
after the mobile terminal body is connected with the multifunctional interface socket, the mobile terminal body disconnects a built-in microphone of the mobile terminal body through the switch interface, and makes conversations through the external microphone.

8. The push-to-talk mobile terminal according to claim 4, wherein, the external Speaker device, the external microphone and the external PTT keyboard are an integrated device.

9. The push-to-talk mobile terminal according to claim 8, wherein, the integrated device is in a hand shank shape.
